# EUROPÄISCHE PATENTANMELDUNG

(11) **EP 2 492 652 A2**
(43) Veröffentlichungstag der Anmeldung: **29.08.2012**
(21) Anmeldenummer: 12001120.0
(22) Anmeldetag: 20.02.2012
(51) Int. Cl.: G01G 19/414

(54) **Drucksensor-Einheit zum Detektieren des Belegungszustandes eines Sitzes**

(30) Priorität: 24.02.2011 DE 202011003186 U
(71) Anmelder: I.G. Bauerhin GmbH, 63584 Gründau (DE)
(72) Erfinder: Neidhardt, Tobias, 63699 Kafenrod-Helfersdorf (DE); Yetim, Züher, 63751 Gelnhausen (DE)
(74) Vertreter: Grimm, Ekkehard

(57) **Zusammenfassung**

Die Erfindung betrifft eine Drucksensor-Einheit zum Detektieren des Belegungszustandes eines Sitzes mit einer im Wesentlichen formstabilen Trägerplatte, auf deren Oberseite mindestens ein Foliendrucksensor, der mindestens zwei einzelne Sensorelemente umfasst, angeordnet ist, mit mindestens einer zwischen der Trägerplatte und dem Foliendrucksensor zwischengefügten, reversibel stauchbaren Zwischenschicht, wobei an der Oberseite der Trägerplatte Stege ausgebildet sind, und mit einer reversibel stauchbaren Deckschicht, die den Foliendrucksensor auf der der Trägerplatte abgewandten Seite abdeckt. Die Stege sind an zwei gegenüberliegenden Längsseiten der Trägerplatte angeordnet, die Auflagepunkte für einen Polsterkern eines Sitzes bilden, wobei die Längsseiten diejenigen sind, die in Richtung einer Linie verlaufen, die sich durch Verbindungslinien der Mitten oder Schwerpunkte der Sensorelemente ergibt. In einer Draufsicht auf die Trägerplatte entspricht der Abstand zwischen dem Rand jedes Sensorelements und der dem Sensorelement zugewandten Innenseite der Stege, mindestens der halben Ausdehnung des Sensorelements in dieser Querrichtung und maximal der dreifachen Ausdehnung des Sensorelements in dieser Querrichtung.

## Beschreibung

Die vorliegende Erfindung betrifft eine Drucksensor-Einheit zum Detektieren des Belegungszustandes eines Sitzes, insbesondere eines Kraftfahrzeugsitzes, mit einer im Wesentlichen formstabilen Trägerplatte, auf deren Oberseite mindestens ein Foliendrucksensor, der mindestens zwei Sensorelemente umfasst, angeordnet ist, mit mindestens einer zwischen der Trägerplatte und dem Foliendrucksensor zwischengefügten, reversibel stauchbaren Zwischenschicht, wobei an der Oberseite der Trägerplatte Stege ausgebildet sind, und mit einer reversibel stauchbaren Deckschicht, die den Foliendrucksensor auf der der Trägerplatte abgewandten Seite abdeckt.

### Stand der Technik

Drucksensor-Einheiten dienen dazu, den Belegungszustand eines Sitzes, insbesondere eines Kraftfahrzeugsitzes, zu erfassen. Diese sind in den Sitz, beispielsweise oberhalb oder unterhalb des Polsterkerns, integriert. Mit diesen Drucksensor-Einheiten wird erfasst, ob der jeweilige Sitz durch eine Person belegt ist oder nicht, um dadurch, aus Gründen der passiven Sicherzeit, zu prüfen, ob die Person den Sicherheitsgurt angelegt hat. Diese Einrichtungen können auch einen Zustand erfassen, bei dem auf der Sitzfläche irgendwelche Gegenstände abgelegt sind, so dass in einem solchen Fall keine Aufforderung zum Anlegen des Sicherheitsgurts erfolgt.

Eine solche Drucksensor-Einheit, die auch als Belegungserfassungseinrichtung bezeichnet werden kann, umfasst als wesentliches Bauteil mehrere druckempfindliche Sensorzellen. Diese Sensorzellen können als Foliendrucksensoren mit zwei übereinander liegenden und mittels Abstandsmaterial auf Abstand gehaltenen Folien ausgeführt sein.

Drucksensor-Einheiten werden üblicherweise im hinteren, mittleren Bereich des Polsterkerns angeordnet und können somit den durch eine Person oder ein Objekt über die Sitzfläche auf den Polsterkern ausgeübten Druck erfassen.

Ist der entsprechende Sitz zusätzlich mit einer Sitzheizung ausgestattet, kann der Sitzbelegungssensor direkt auf einer Sitzheizung, die sich unmittelbar auf dem Schaumstoffkern befindet, positioniert sein.

Es ist auch bekannt, dass solche Foliendrucksensoren in den Polsterkern integriert werden. Weiterhin ist es bekannt, den Foliendrucksensor auf einer Trägerplatte anzuordnen, mittels der die Drucksensor-Einheit beispielsweise an der Tragestruktur eines Sitzes positioniert und befestigt ist.

Eine wesentliche Forderung an solche Drucksensor-Einheiten ist diejenige, dass sie positionsgenau in den Sitz eingebaut werden müssen und dass diese Position im Betrieb des Fahrzeugs behalten werden muss, damit eine ortsabhängige Detektion gewährleistet ist. Auch ist eine weitere Forderung diejenige, dass sie eine zuverlässige Detektion gewährleisten, insbesondere in Abhängigkeit von der Kraft, die über die Sitzfläche auf die Sensorzellen ausgeübt wird.

Die DE 42 37 072 C1 beschreibt resistive Foliendrucksensoren mit mehreren Sensorelementen, die aus zwei zusammenlaminierten Polymerlagen aufgebaut sind, wobei die eine Polymerlage mit einem Halbleitermaterial und die andere mit zwei Leiterbahnen beschichtet ist. Nach der DE 42 37 072 C1 kann der Sitzbelegungssensor zwischen einem Sitzbezug und einer darunter liegenden Gummihaarmatte oder innerhalb der Gummihaarmatte oder zwischen der Gummihaarmatte und einem Federrahmen des Sitzes oder unmittelbar oberhalb einer Sitzschale angeordnet werden.

Aus der DE 197 52 976 A1 ist eine Sitzerfassungsvorrichtung bekannt, die einen folienförmigen, druckempfindlichen Schalter aufweist, der innerhalb eines Sitzpolsters eingebettet ist. Hierzu ist das Sitzpolster mit einer Aussparung versehen, die eine unterhalb einer Sitzoberfläche angeordnete Deckenoberseite hat und sich in eine der Sitzoberfläche gegenüberiiegende Richtung öffnet, wobei der druckempfindliche Schalter in die Aussparung eingelegt ist.

Die DE 20 2010 003 563 U1 zeigt eine Drucksensor-Einheit gemäß dem Oberbegriff des Anspruchs 1. Diese Drucksensor-Einheit zum Detektieren des Belegungszustandes eines Sitzes, insbesondere eines Kraftfahrzeugsitzes, umfasst einen Drucksensor, der als Foliensensor mit zwei auf Abstand gehaltenen Folien mit einem dazwischen liegenden Abstandsmaterial ausgeführt ist. Diese Drucksensor-Einheit ist als Modul aufgebaut, mit einer Grundplatte, auf der der Foliensensor aufgebracht ist, und mit mindestens einer zwischen der Grundplatte und dem Foliensensor angeordneten, das Abstandsmaterial bildenden, stauchbaren Zwischenschicht. Die Grundplatte weist Verbindungselemente auf, mittels der die Grundplatte an der tragenden Struktur eines Sitzes verbindbar ist. Zusätzlich kann eine den Foliensensor auf seiner zum Sitzpolster hin weisenden Seite bedeckende Deckschicht vorgesehen sein. Sie kann beispielsweise aus einer Folie (PET; PU; PA), einem non-woven-Material, einem Vlies, Filz oder Nadelvlies, sowie aus Zellkautschuk gebildet sein. Diese Deckschicht soll die Funktion der Sensoren auch bei inhomogenen Sitzpolsteroberflächen sicherstellen. Gleichzeitig soll durch diese Deckschicht der Foliensensor geschützt werden.

Die DE 196 01 969 A1 beschreibt eine elektrisch kontaktierbare Funktionsmatte, insbesondere Sensormatte oder Heizmatte zum Einbau in das Sitzpolster eines Fahrzeugsitzes. Die Funktionsmatte ist integraler Bestandteil eines Teils eines Sitzpolsters, wobei die Funktionsmatte im Zuge der Herstellung des Sitzpolsterteils in dieses eingeschäumt wird. Für die Herstellung der Funktionsmatte wird ein Formwerkzeug verwendet, in das ein Foliendrucksensor eingelegt wird, um dann nach Schließen des Formwerkzeugs den Foliendrucksensor in ein Sitzkissen-Formteil einzuschäumen. In dem Formwerkzeug sind Positionierungshilfen in Form von Positionierdomen vorgesehen, auf die die Sensormatte aufgesteckt wird, um eine genaue Lagefixierung der Sensormatte in der Schäumform zu gewährleisten.

### Aufgabe

Der vorliegenden Erfindung liegt nun die Aufgabe zugrunde, eine Drucksensor-Einheit zum Detektieren des Belegungszustands eines Sitzes zu schaffen, die genaue Detektionsergebnisse liefert, d.h. auch bei hohen Temperaturen (größer 90 °C) eine Frühauslösung vermeidet.

### Erfindung

Die vorliegende Aufgabe wird durch eine Drucksensor-Einheit mit den Merkmalen des Anspruchs 1 gelöst.

Vorteilhafte Ausgestaltungen der Drucksensor-Einheit ergeben sich aus den abhängigen Ansprüchen.

Erfindungsgemäß sind die Stege, die an der Trägerplatte vorhanden sind, an zwei gegenüberliegenden Längsseiten der Trägerplatte angeordnet. Diese Stege bilden die Auflagepunkte oder Auflageflächen für einen Polsterkern eines Sitzes, wobei die Längsseiten diejenigen sind, die in Richtung einer Linie verlaufen, die sich durch Verbindungslinien der Mitten oder Schwerpunkte der Sensorelemente ergibt. Üblicherweise sind die Sensorzellen bzw. die Mitten oder Schwerpunkte der Sensorzellen auf einer Geraden angeordnet. Falls die einzelnen Sensorzellen von einer geraden Line abweichend positioniert sind, geben sie dennoch durch ihre Orientierung eine Linie vor, zu der, parallel oder annähernd parallel, die Stege verlaufen.

Weiterhin ist ein wesentliches Merkmal darin zu sehen, dass, in einer Draufsicht auf die Oberseite der Trägerplatte gesehen, der Abstand zwischen dem Rand jedes Sensorelements und der dem Sensorelement zugewandten Innenseite der Stege, rechtwinklig zu den Stegen, mindestens der halben Ausdehnung des Sensorelements in dieser Querrichtung entspricht und maximal der dreifachen Ausdehnung des Sensorelements in dieser Querrichtung entspricht. Durch diese Maßnahme ist gewährleistet, dass die Fläche des Polsterkerns nicht unmittelbar auf die Sensorzellen drückt, sondern der durch den Polsterkern ausgeübte Druck über die Deckfläche definiert auf die Sensorzellen verteilt und ausgeübt wird. Weiterhin können die Sensorzellen über die Deckfläche definiert vorgespannt werden, so dass sie sich in einem Zustand nahe ihrer Auslöseschwelle befinden. Diese Anordnungen arbeiten auch bei unterschiedlichen Umgebungstemperaturen zuverlässig.

Eine bevorzugte Ausführungsform der Drucksensor-Einheit sieht vor, dass in der Oberseite der Trägerplatte eine wannenartige Vertiefung ausgebildet ist, in die sich die stauchbare Zwischenschicht einlegt. Dabei sollte bevorzugt die wannenartige Vertiefung eine Tiefe aufweisen, die etwa der Dicke.der stauchbaren Zwischenschicht entspricht. Durch diese wannenartige Vertiefung, in die sich die Zwischenschicht einlegt, wird erreicht, dass die Dicke der Trägerplatte oberhalb der Tragestruktur des Sitzes dünner ist, da die wannenartige Vertiefung zwischen der Tragestruktur des Sitzes positioniert ist und somit einen dünneren Aufbau im eingebauten Zustand gewährleistet. Durch diese geringe Einbauhöhe wird der H-Punkt des Sitzes nicht beeinträchtigt. Im Fahrzeug-Design ist der H-Punkt der Drehpunkt zwischen dem Rumpf und dem Oberschenkel einer Norm-Person.

Die wannenartige Vertiefung weist Außenabmessungen auf, so dass sich die stauchbare Zwischenschicht darin einlegen kann.

Die Stege sollten eine Höhe derart aufweisen, dass sie mindestens ein Drittel, vorzugsweise etwa die Hälfte, der Dicke der Deckschicht überdecken; die maximale Überdeckung sollte nicht mehr als zwei Drittel der Dicke der Deckschicht betragen. Mit anderen Worten sollte die Deckschicht in Bezug auf ihre Dicke mindestens ein Drittel über die durch die Auflagepunkte oder Auflagefläche der Stege aufgespannte Fläche vorstehen. Diese Maßnahmen gelten für den Fall, dass die Deckschicht zwischen die Stege eingelegt wird. Eine solche Ausführungsform ist als bevorzugt anzusehen. Bei dieser Ausführungsform übt der Polsterkern auf die Deckschicht einen Druck aus, bis der Polsterkern auf den Stirnseiten der Stege aufliegt. Hierdurch werden die Deckschicht und damit die Sensorelemente des Foliensensors vorgespannt. Wenn dann der durch den Polsterkern ausgeübte Druck weiter erhöht wird, biegt sich die Unterseite des Polsterkerns zwischen den Stegen, die die Auflage des Polsterkerns bilden, durch, so dass der auf die Sensorelemente ausgeübte Druck weiter erhöht wird und die Sensorelemente aktiviert werden und somit den Belegungszustand anzeigen.

Auf der Außenseite der Stege können weitere Stege angeordnet sein. Alle Stege sollten dann dieselbe Höhe aufweisen und deren Stirnseiten sollten eine Fläche aufspannen. Diese Stege bilden in Draufsicht auf die Oberseite der Trägerplatte gesehen eine Gitterstruktur, die auch zur Steifigkeit der Trägerplatte beiträgt.

Wie bereits erwähnt, sollte der Foliendrucksensor drei oder mehr Sensorelemente aufweisen, deren Mitten oder Schwerpunkte auf einer Geraden angeordnet sind. Die Bezugnahme auf den Schwerpunkt gilt für solche Fälle, bei denen die Außenkontur der Sensorelemente von einem Kreis abweicht, beispielsweise dann, wenn die Sensorelemente in der Draufsicht eine rechteckige Kontur besitzen.

Vorzugsweise werden einzelne Sensorelemente eingesetzt, die eine kreisrunde Flächenausdehnung haben.

Die einzelne Sensorzelle weist mindestens einen Durchmesser zwischen 3 mm und 20 mm, vorzugsweise zwischen 11 mm und 13 mm, auf.

Die Höhe der Stege und damit der Überstand der Deckschicht über die durch die Auflagepunkte oder Auflagefläche der Stege aufgespannten Fläche sollte in Abhängigkeit von der Stauchhärte der Deckschicht so gewählt werden, dass ein sich auf die Stege auflegender Polsterkern die Deckschicht derart staucht, dass die Sensorelemente des Foliendrucksensors zwar vorgespannt sind, aber noch keine Detektion auslösen. Dies gilt für den Fall, dass sich die Deckschicht zwischen die Stege einpasst. Diese Maßnahme ist analog auch für den Fall anwendbar, bei dem die Deckschicht auf den Stirnseiten der Stege aufliegt und die Deckschicht durch das Gewicht des Polsterkerns auf eine minimale Dicke zusammengedrückt wird.

An der Trägerplatte können Positionierungs- und/oder Verbindungselemente vorgesehen werden, mittels denen die Trägerplatte an der tragenden Struktur eines Sitzes verbindbar ist. Bevorzugt ist zumindest ein Teil der Positionierungs- und/oder Verbindungselemente durch Halter gebildet, die sich an dem Drahtgestell eines Sitzes festklemmen. Mit diesen Positionierungselementen kann die Drucksensor-Einheit in einer definierten Orientierung zu dem Sitz befestigt werden und behält diese Orientierung auch bei Bewegungen des Polsterkerns bei.

Weitere Einzelheiten und Merkmale der Erfindung werden aus der nachfolgenden Beschreibung von Ausführungsbeispielen anhand der Zeichnung ersichtlich. In der Zeichnung zeigen
- Figur 1: eine Drucksensor-Einheit gemäß der Erfindung in einer Draufsicht,
- Figur 2: einen Schnitt entlang der Schnittlinie A-A in Figur 1,
- Figur 3: eine Draufsicht auf die Drucksensor-Einheit der Figur 1 ohne Deckschicht,
- Figur 4: die Drucksensor-Einheit der Figur 1 in einer Explosionsdarstellung,
- Figur 5: die Drucksensor-Einheit der Figur 1 in einer vergrößerten Darstellung,
- Figur 6: einen Schnitt entlang der Schnittlinie A-A in Figur 5,
- Figur 7: eine weitere Drucksensor-Einheit in einer Darstellung vergleichbar mit derjenigen in Figur 1, jedoch mit einer geänderten Anordnung der einzelnen Sensorelemente, und
- Figur 8: eine Drucksensor-Einheit vergleichbar mit derjenigen der Figur 7, allerdings mit Sensorelementen, die eine quadratische Außenkontur aufweisen.

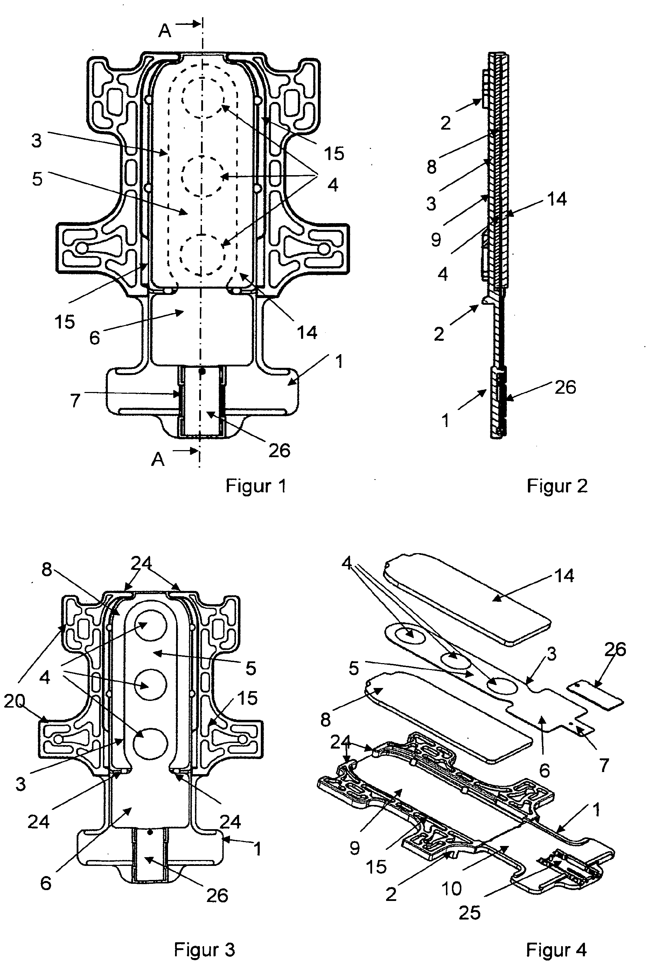

Die Drucksensor-Einheit, wie sie in den Figuren 1 bis 4 dargestellt ist, dient zum Detektieren des Belegungszustandes eines Sitzes, bevorzugt für solche Sitze, die in Kraftfahrzeugen eingesetzt werden. Diese Drucksensor-Einheit ist dazu ausgelegt, dass sie auf dem Sitzgestell eines Fahrzeugsitzes angeordnet werden kann. Vorzugsweise wird die Drucksensor-Einheit an dem Draht- oder Federgestell des Sitzes aufgelegt und daran fixiert.

Die Drucksensor-Einheit besitzt eine Trägerplatte 1, die aus einem im Wesentlichen formstabilen Material, zum Beispiel PA66 oder PA6 oder PP, bevorzugt PA66+GF oder PA6+GF oder PP+GF, gebildet ist. An der Unterseite dieser Trägerplatte 1 befinden sich Positionierungs- und/oder Verbindungselemente, oder auch Halter 2, mit denen die Trägerplatte 1 an einem Sitzgestell so befestigt werden kann, dass sie sich auch unter wiederholter Benutzung des Sitzes nicht verschiebt oder von dem Sitzgestell löst.

Auf der Oberseite der Trägerplatte 1 ist ein Foliendrucksensor 3 angeordnet, der in dem gezeigten Beispiel drei einzelne Sensorelemente 4 umfasst. Diese Sensorelemente 4 sind einem Sensorabschnitt 5 zugeordnet. An dem einen Ende dieses Sensorabschnitts 5 schließt sich ein Verlängerungsteil 6 an, der in einem Anschlussabschnitt 7 endet.

Zwischen Trägerplatte 1 und Foliendrucksensor 3 ist eine Zwischenschicht 8 zwischengefügt. Diese Zwischenschicht 8 ist so dimensioniert, dass sie sich in eine wannenartige Vertiefung 9, die in der Oberseite der Trägerplatte ausgebildet ist, einlegt.

Die wannenartige Vertiefung 9 sowie die Zwischenschicht 8 sind so dimensioniert, dass sich darauf nur der Sensorabschnitt 5 mit den Sensorelementen 4 auflegt. Dagegen liegt der Verlängerungsteil 6 des Foliendrucksensors 3 unmittelbar auf einer Anschlussfläche 10 der Trägerplatte 1, die sich an die wannenartige Vertiefung 9 anschließt, auf.

Die Dicke der Zwischenschicht 8 und/oder die Tiefe der wannenartigen Vertiefung 9 sind so gewählt, dass die Oberseite der Zwischenschicht 8 mit der Ebene der Anschlussfläche 10 etwa übereinstimmt.

In den Ausführungsformen der Drucksensor-Einheit, die in den Figuren 1 bis 4 sowie 5 und 6 gezeigt sind, weisen die einzelnen Sensorelemente 4 des Foliendrucksensors 3 eine kreisförmige Kontur auf. Die Mitten 11 dieser Sensorelemente 4 liegen auf einer Linie, die mit dem Bezugszeichen 12 bezeichnet ist; diese Linie 12 fällt mit der Symmetrieachse 13 der Drucksensor-Einheit zusammen.

Die in den Figuren dargestellte Drucksensor-Einheit ist dazu vorgesehen, dass sie mit der Symmetrieachse 13 in Fahrtrichtung eines Fahrzeugs auf einem Sitzgestell angeordnet wird.

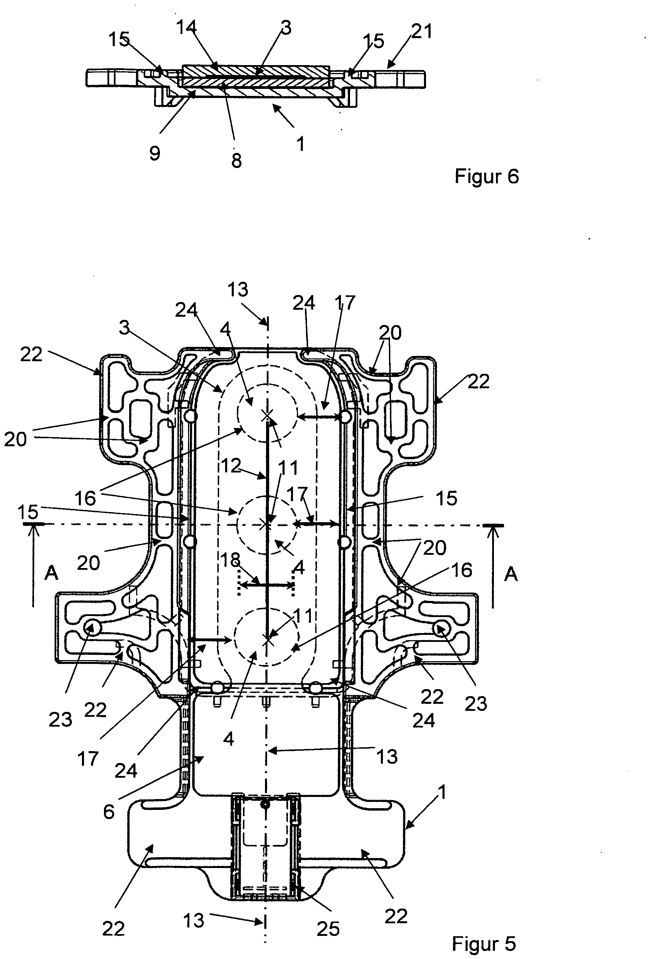

Weiterhin ist der Sensorabschnitt 5 mit den Sensorelementen 4 auf der der Trägerplatte 1 abgewandten Seite mit einer reversibel stauchbaren Deckschicht 14 abgedeckt, wie dies insbesondere durch die Figuren 4 und 6 verdeutlicht wird.

Die Trägerplatte 1 weist an den zwei gegenüber liegenden Längsseiten Stege 15 auf, die die wannenartige Vertiefung 9 seitlich begrenzen, wie dies insbesondere die Figuren 5 und 6 zeigen. Die Längsseiten der Trägerplatte 1 sind hierbei diejenigen Seiten, die parallel zu bzw. in Richtung der durch die Mitten 11 der Sensorelemente 4 verlaufenden Linie 12 ausgerichtet sind.

Wie anhand der Figur 6 zu sehen ist, legt sich die Zwischenschicht 8 mit ihrer Oberfläche flächenbündig in die Wanne 9 derart ein, dass die Oberfläche der Zwischenschicht 8 in Bezug auf ihre Höhe mit dem Rand der wannenartigen Vertiefung 9 abschließt und somit nicht über den Rand der Wanne vorsteht. Wie weiterhin die Figur 6 verdeutlicht, sind die Dicke der den Foliendrucksensor 3 abdeckenden Deckschicht 14 sowie die Höhe der Stege 15, die die wannenartige Vertiefung 9 in Längsrichtung begrenzen, so dimensioniert, dass die Stege 15 mindestens ein Drittel der Dicke der Deckschicht 14 überdecken. Hierdurch wird erreicht, dass die Unterseite eines nicht dargestellten Polsterkerns, die auf der Drucksensor-Einheit aufliegt, die Deckschicht 14 staucht bzw. zusammendrückt, bis der Polsterkern auf den freien Stirnflächen der Stege 15 zur Auflage gelangt. In diesem Zustand sind bei einem nicht durch eine Person oder durch irgendeinen Gegenstand belegten Sitz die Sensorelemente 4 des Foliendrucksensors 3 vorgespannt, ohne dass bereits eine Detektion ausgelöst wird. Durch eine solche Vorspannung wird der Foliendrucksensor 3 in einen Zustand versetzt, der zu reproduzierbaren Auslösezuständen auch dann führt, wenn sich die Klimabedingungen beispielsweise in einer Fahrgastzelle ändern oder der Polsterkern gewisse Alterungserscheinungen zeigt.

Eine weitere Maßnahme, um solche Bedingungen, wie sie vorstehend beschrieben sind, zu erzielen, ist diejenige, dass die Stege 15 an den zwei gegenüberliegenden Längsseiten der Trägerplatte 1, die die Auflagepunkte oder die Auflageflächen des Polsterkerns bilden, definiert voneinander in Abhängigkeit des eingesetzten Foliendrucksensors 3 und der Sensorelemente 4 beabstandet sind. Der Abstand der beiden Stege 15 ist derart gewählt, dass, in einer Draufsicht auf die Trägerplatte 1 gesehen, der Abstand zwischen dem Rand 16 jedes Sensorelements 4 und der dem Sensorelement 4 zugewandten Innenseite der Stege 15, rechtwinklig zu den Stegen 15 gesehen, mindestens der halben Ausdehnung des Sensorelements 4 in dieser Querrichtung entspricht und maximal der dreifachen Ausdehnung des Sensorelements 4 in dieser Querrichtung entspricht. Um dies zu verdeutlichen, ist in Figur 5 dieser Abstand zwischen dem Rand 16 des Sensorelements 4 und dem dazu zugeordneten Steg 15 mit dem Bezugszeichen 17 bezeichnet, während die Ausdehnung des Sensorelements 4 in dieser Querrichtung (rechtwinklig zu der Linie 12) mit dem Bezugszeichen 18 bezeichnet ist. Mit diesen Maßnahmen ist gewährleistet, dass der auf den Stirnseiten der Stege 15 aufliegende Polsterkern dann, wenn eine Person auf dem Fahrzeugsitz sitzt, eine definierte Durchbiegung zwischen den beiden Auflagen, gebildet durch die Stege 15, erfährt, wodurch ein definierter Druck auf die Sensorelemente 4 ausgeübt wird.

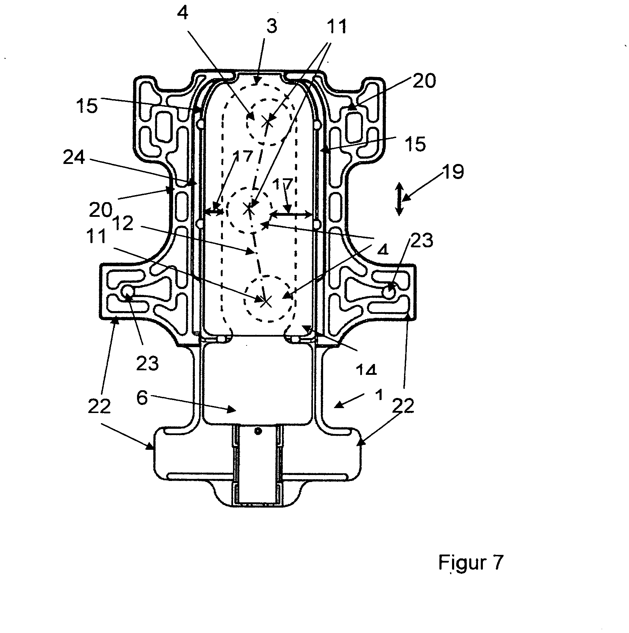

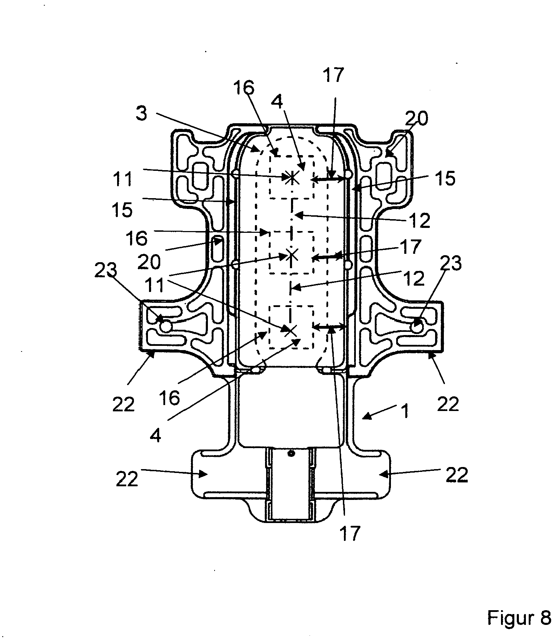

Die vorstehende Vorschrift für den Abstand 17 zwischen dem Rand 16 der Sensorelemente 4 und der Innenseite der Stege 15 ist auch dann einzuhalten, wenn die Mitten 11 der Sensorelemente 4 des Foliendrucksensors 3 von einer geraden Linie abweichen, wie dies in Figur 7 dargestellt ist, und/oder die Sensorelemente 4 eine Außenkontur aufweisen, die von einem Kreis abweicht, wie dies in Figur 8 in Form von Sensorelementen 4 mit einer quadratischen Außenkontur dargestellt ist.

In Figur 7 wird durch die Line 12, die die Mitten 11 der kreisförmigen Sensorelemente 4 verbindet, eine Richtung vorgegeben, die durch den Doppelpfeil 19 angezeigt ist. Entsprechend sind die Stege 15 der wannenartigen Vertiefung 9 etwa parallel zu dieser Längsrichtung 19 ausgerichtet. Der Abstand 17, der vorstehend anhand der Figur 5 erläutert wurde, variiert bei der Ausführungsform der Figur 7 gegenüber der Ausführungsform der Figur 5 dadurch, dass das mittlere Sensorelement 4 in Figur 7 näher zu dem einen Steg 15 (der linke Steg 15 in Figur 7) als zu dem anderen Steg 15 (der rechte Steg 15 in Figur 7) positioniert ist.

Für Sensorelemente 4, die von einer kreisrunden Außenkontur abweichen, kann als Mitte 11 auch der jeweilige Flächenschwerpunkt herangezogen werden. Für die Wahl des Abstands 17 wird die Ausdehnung des Sensorelements ebenfalls, rechtwinklig zu den Stegen 12 gesehen, zwischen dem Rand 16 eines solchen Sensorelements 4 und der Innenseite des dazu zugeordneten Stegs 15 herangezogen, wie dies die Figur 8 verdeutlicht.

In den Figuren sind neben den Stegen 15 weitere Stege 20 an der Trägerplatte 1 ausgebildet, die auf der Außenseite der Stege 15 liegen. Diese weiteren Stege 20 sind in einer Höhe ausgeführt, die der Höhe der Stege 15 entspricht, so dass durch die Stirnseiten der Stege 15 und 20 eine große Auflagefläche, in Figur 6 mit dem Bezugszeichen 21 bezeichnet, bereitgestellt wird, auf die sich ein Polsterkern auflegen kann. Anhand der Figuren ist auch zu erkennen, dass diese Stege 15 und 20, in einer Draufsicht auf die Trägerplatte 1, in einer eine gitterartige Struktur bildenden Anordnung positioniert sind.

Die Trägerplatte 1 besitzt vier Seitenabschnitte 22, die die Trägerplatte 1 aussteifen und darüber hinaus Auflage-, Positionierungs- und Befestigungsbereiche bilden, um die Trägerplatte 1 auf dem Sitzgestell eines Fahrzeugsitzes aufzulegen, zu positionieren und zu befestigen. Zur Befestigung können an der Unterseite der Trägerplatte 1 Halter 2 vorgesehen werden, wie sie in Figur 4 dargestellt sind, oder es können hierzu Befestigungslöcher 23 verwendet werden.

Der Foliendrucksensor 3 kann in seiner Außenkontur so strukturiert sein, dass er an der Trägerplatte 1 lagegenau eingelegt werden kann, wozu an der Trägerplatte 1 Positionierungsstege 24 angeordnet sind. Diese Positionierungsstege 24 befinden sich jeweils an den Enden der Stege 15, wobei sich zwei dieser Stege 24 in den Bereich des Foliendrucksensors 3 zwischen dem Sensorabschnitt 5 und dem Verlängerungsteil 6 einlegen, wozu der Foliendrucksensor 3 entsprechende Einbuchtungen aufweist.

Weiterhin legt sich der Anschlussabschnitt 7 des Foliendrucksensors 3 in eine entsprechende Aufnahme 25 an der Trägerplatte 1 ein und wird durch einen Deckelteil 26 abgedeckt, durch den gleichzeitig die nicht dargestellten Anschlussleitungen für den Foliendrucksensor 3 abgedeckt und gesichert sind.

Während in den Figuren der dargestellten Ausführungsformen die Deckschicht 14 zwischen die Stege 15 eingelegt ist, ist auch die Möglichkeit vorgesehen, die Deckschicht 14 in einer Größe auszuführen, dass sich deren Unterseite auf die Stege 15 bzw. die Auflageflächen 21 auflegt. In einem solchen Fall wird dann die Deckschicht 14 im Bereich der Stege 15 und der Auflagefläche 21 zusammengedrückt; gleichzeitig wird der Teil der Deckschicht 14 oberhalb der Wanne bzw. zwischen den Stegen 15 in diesem Bereich nach unten gedrückt, bis sich dieser Teil der Deckschicht 14 gegen den Foliendrucksensor 3 anlegt und diesen vorspannt.

## Patentansprüche

1. Drucksensor-Einheit zum Detektieren des Belegungszustandes eines Sitzes, mit einer im Wesentlichen formstabilen Trägerplatte (1), auf deren Oberseite mindestens ein Foliendrucksensor (3), der mindestens zwei einzelne Sensorelemente (4) umfasst, angeordnet ist, mit mindestens einer zwischen der Trägerplatte (1) und dem Foliendrucksensor (3) zwischengefügten, reversibel stauchbaren Zwischenschicht (8), wobei an der Oberseite der Trägerplatte (1) Stege (15) ausgebildet sind, und mit einer reversibel stauchbaren Deckschicht (14), die den Foliendrucksensor (3) auf der der Trägerplatte (1) abgewandten Seite abdeckt, **dadurch gekennzeichnet, dass** die Stege (15) an zwei gegenüberliegenden Längsseiten der Trägerplatte (1) angeordnet sind, die Auflagepunkte oder Auflageflächen für einen Polsterkern eines Sitzes bilden,
wobei die Längsseiten diejenigen sind, die in Richtung einer Linie (12) verlaufen, die sich durch Verbindungslinien (12) der Mitten (11) oder Schwerpunkte der Sensorelemente (4) ergibt, und dass, in einer Draufsicht auf die Oberseite der Trägerplatte (1) gesehen, der Abstand zwischen dem Rand (17) jedes Sensorelements (4) und der dem Sensorelement (4) zugewandten Innenseite der Stege (15), rechtwinklig zu den Stegen (15) gesehen, mindestens der halben Ausdehnung (18) des Sensorelements (4) in dieser Querrichtung entspricht und maximal der dreifachen Ausdehnung (18) des Sensorelements (4) in dieser Querrichtung entspricht.

2. Drucksensor-Einheit nach Anspruch 1, **dadurch gekennzeichnet, dass** in der Oberseite der Trägerplatte (1) eine wannenartige Vertiefung (9) ausgebildet ist, in die sich die stauchbare Zwischenschicht (8) einlegt.

3. Drucksensor-Einheit nach Anspruch 2, **dadurch gekennzeichnet, dass** die wannenartige Vertiefung (9) eine Tiefe aufweist, die etwa der Dicke der stauchbaren Zwischenschicht (8) entspricht.

4. Drucksensor-Einheit nach Anspruch 2 oder 3, **dadurch gekennzeichnet, dass** die wannenartige Vertiefung (9) in ihren Außenabmessungen mindestens den Außenabmessungen des Foliendrucksensors (3) entspricht.

5. Drucksensor-Einheit nach einem der Ansprüche 1 bis 4, **dadurch gekennzeichnet, dass** die Stege (15) eine Höhe derart aufweisen, dass sie mindestens ein Drittel der Dicke der Deckschicht (14) überdecken,

6. Drucksensor-Einheit nach einem der Ansprüche 1 bis 5, **dadurch gekennzeichnet, dass** die Deckschicht (14) in Bezug auf ihre Dicke mindestens ein Drittel über die durch die Auflagepunkte oder Auflagefläche der Stege (15) aufgespannten Fläche vorsteht.

7. Drucksensor-Einheit nach einem der Ansprüche 1 bis 6, **dadurch gekennzeichnet, dass** an der Außenseite der Stege (15) weitere Stege (20) angeordnet sind, wobei alle Stege (15, 20) dieselbe Höhe aufweisen, und dass die Stege (15, 20), in Draufsicht auf die Oberseite der Trägerplatte (1) gesehen, eine Gitterstruktur bilden.

8. Drucksensor-Einheit nach einem der Ansprüche 1 bis 7, **dadurch gekennzeichnet, dass** der Foliendrucksensor (3) drei oder mehr Sensorelemente (4) aufweist, deren Mitten (11) oder Schwerpunkte auf einer Geraden angeordnet sind.

9. Drucksensor-Einheit nach einem der Ansprüche 1 bis 8, **dadurch gekennzeichnet, dass** die einzelnen Sensorelemente (4) eine kreisrunde Flächenausdehnung haben.

10. Drucksensor-Einheit nach einem der Ansprüche 1 bis 9, **dadurch gekennzeichnet, dass** die Stege (15) eine Höhe derart aufweisen, dass sie etwa die Hälfte der Dicke der Deckschicht (14) überdecken.

11. Drucksensor-Einheit nach einem der Ansprüche 1 bis 10, **dadurch gekennzeichnet, dass** die Höhe der Stege (15) und damit der Überstand der Deckschicht (14) über die durch die Auflagepunkte oder Auflagefläche der Stege (15) aufgespannten Fläche in Abhängigkeit von der Stauchhärte der Deckschicht (14) so gewählt ist, dass ein sich auf die Stege (15) auflegender Polsterkern die Deckschicht (14) derart staucht, dass die Sensorelemente (4) des Foliendrucksensors (3) vorgespannt sind, aber noch keine Detektion auslösen.

12. Drucksensor-Einheit nach einem der Ansprüche 1 bis 11, **dadurch gekennzeichnet, dass** an der Trägerplatte (1) Positionierungs- und/oder Verbindungselemente (2, 23) vorgesehen sind, mittels denen die Trägerplatte (1) an der tragenden Struktur eines Sitzes verbindbar ist.

13. Drucksensor-Einheit nach Anspruch 12, **dadurch gekennzeichnet, dass** zumindest ein Teil der Positionierungs- und/oder Verbindungselemente durch Halter (2) gebildet sind, die sich an dem Drahtgestell eines Sitzes festklemmen.
